# EUROPEAN PATENT APPLICATION

(11) **EP 3 560 908 A1**
(43) Date of publication of application: **30.10.2019**
(21) Application number: 18780317.6
(22) Date of filing: 22.03.2018
(51) Int. Cl.: C05D 1/04, C05D 9/00, C05F 1/00, C05F 3/00, C05F 5/00, C05G 1/00, C05G 3/04, C09K 17/00, C09K 17/40, A01G 24/12, A01G 24/15, A01G 24/22

(54) **SOIL BUILDER**

(30) Priority: 07.04.2017 CL 20170848
(71) Applicant: Ganadera y Multiplicadora Genética Bio-Ñuble S.A., Octava Región, Chillán (CL)
(72) Inventor: GALLO GUÍÑEZ, Juan Aníbal, Chillán (CL)
(74) Representative: Carvajal y Urquijo, Isabel
(86) International application number: PCT/IB2018/051958
(87) International publication number: WO 2018/185592

(57) **Abstract**

The present invention relates to an organic soil builder, conditioner and/or biofertilizer, and to the production method thereof, which organic soil conditioner and/or biofertilizer has an organic base that allows the availability of nutrients in the soil to be increased for use when the plant requires, or the recovery of degraded soils. The method of the invention uses any type of animal waste sludges together with dry matter and granulated minerals. This mixture is fermented for 40 to 210 days, thus obtaining the organic soil builder, conditioner and/or biofertilizer of the invention.

## Description

### FIELD OF THE INVENTION

The invention aims at the recovering of soils for agriculture, either from soils depleted by previous crops or plantations, erosions caused by natural catastrophes or that have simply lost their vegetal layer or fertility, the builder allows to recover these soils in periods of around 1 year.

### BACKGROUND OF THE INVENTION

The agronomic definition of soil is "set of organic and inorganic materials of the earth's surface, able to sustain plant life".

But the soil is something else, it is much more. This is what all terrestrial life is based on, it is the direct receiver of many of our activities, it is the medium with which we most directly interact, together with the low atmosphere. The soil is between the earth's surface and the bedrock. While the latter is studied by geology, soil is studied by edaphology, a branch of geology but in practice it is quite far from it, being also studied by biologists, chemists and ambientologists.

This distance from edaphology is not new, but the soil has always gone unnoticed by most scientists. This has allowed the edaphological study as part of the natural environment has been ignored, or has been given very little importance in all types of environmental studies. For example, in environmental impact studies, geology and geomorphology have traditionally prevailed. It is preferable that a linear infrastructure (roads, railways, etc.) pass through a valley of a river (soils with great aptitude for agriculture due to its exceptional fertility) to do so for a mountain where the visual impact is important. However, the opportunity cost of the soil that has been occupied by said infrastructure has never been taken into account. The soil is a non-renewable resource, if it is defined non-renewable as that resource consumed at a higher rate than its renewal. Approximately 100 years are needed to form 1 cm of soil. Not only infrastructures exert negative externalities on the ground, but much of human activities also do so. The Soil contamination is a big problem nowadays, especially when decontaminating a soil is very expensive and difficult. The soil is a great buffer of contamination, accumulating it without apparently showing adverse effects on it. However, for the soil to exert this buffering function it is necessary that its physico-chemical properties are not altered to a great extent.

But there is an activity above all whose influence on the ground is decisive. The Agriculture. It is an activity whose objective is to obtain the best possible profitability (in terms of harvest). To do this, it do not hesitate to use agrochemicals (fertilizers, phytosanitary ...) in order to optimize the production. In addition to contamination by these products, other effects can be produced, such as the loss of soil by erosion, the reduction of edaphic biodiversity (invertebrates, microfauna and microflora), loss of structure and, in extreme cases, desertification.

If the fact that soil is a non-renewable resource is not taken into account and that conserving soil both quantitatively and qualitatively is vital for the survival of civilization, the harvests will be less and less, the products will have less and less quality, and there would see where were vegetation, it will be scarce in the future, and how contamination will affect it more, and since it cannot exercise the regulatory function of contamination, it will be transferred to other media such as the hydrosphere. Therefore, the soil is a precious asset that must be protected, at the same level as the biodiversity, because they are intimately related and because the quality of life depends on it. Only with a healthy soil in full conditions can healthy and prosperous societies be developed.

The present invention consists of an organic reconstitutant, conditioner and/or biofertilizer of soils, which may also be referred to as a substrate and its manufacturing process, having an organic base that will allow increasing the availability of nutrients in the soil to be used when the plant, or the recovery of degraded soils require it. The process of the invention utilizes fermented animal waste sludges in conjunction with dry vegetal material, such as straw, humus and clays or other granulated minerals, such as SIALO flour (product obtained by igneous rock crushing, basalt, slag or even ash). The final product obtained is an excellent builder, conditioner and/or organic soil biofertilizers.

The need to produce food in larger quantities, less time and improvement in quality and yield, has caused a change in traditional agriculture, allowing to obtain productions that meet these requirements in crops. However, these high standards are based on the use of fertilizers. On the other hand, the excessive application of conventional fertilizers is one of the factors that most negatively influences the degradation of soils, which is why the incorporation of more innocuous fertilizers is indispensable, in order to replace or diminish the excessive use of chemical synthesis fertilizers.

The most widely used fertilizers worldwide are inorganic products that contain mainly nitrogen (N), phosphorus (P) and potassium (K). These products are recognized as indispensable to provide the amount of nutrients necessary to ensure crop yield. However, there are a number of factors associated with chemical synthesis fertilizers that are currently the subject of extensive discussion. Some of these factors are: reduction of the world reserves of phosphate rock, main mineral used for the synthesis of phosphorus fertilizers; environmental contamination by the chemical synthesis of nitrogen and phosphate fertilizers and environmental contamination by applying fertilizers to the soil.

It is recognized worldwide that the production of fertilizers consumes a lot of energy and emits significant amounts of greenhouse gases. In this regard, it has been calculated that fertilizer production consumes approximately 1.7% of total world energy and that it is responsible for approximately 1.5% of greenhouse gas emissions.

In the case of nitrogen fertilizers, the main emissions of greenhouse gases correspond to CO₂, generated by the combustion of natural gas for the synthesis of ammonia, and nitrous oxide emitted during the production of nitric acid. The production of phosphate fertilizers also emits large amounts of CO₂ from the consumption of fossil fuels used in different stages of the production process.

Nitrogen and potassium fertilizers in general have a low concentration of As, Cd and Pb and, therefore, do not contribute significantly to the accumulation of toxic elements in soil and crops.

On the contrary, in the case of phosphate fertilizers, these may contain heavy metals, depending on the type and source of the mineral from which it is extracted.

In this scenario, there is a need to have fertilizers that provide the necessary nutrients to the soil without contaminating them, without adding heavy metals, and whose production processes are also friendly to the environment. The product of the present invention fulfills all these objectives, it is a natural product that does not produce contamination or saturation of minerals to the soil, does not comprise volatile components and contains all the components of a builder substrate, which additionally allows to recover the soil and fertilize it.

One of the processes of the invention has as an additional advantage the production of methane gas. On the other hand, the product obtained directly allows the recovery or improvement of arid soils, allowing to increase the amount of productive agricultural hectares in our country or in other regions of the world. In addition, using dry vegetal material, such as straw or other, prevents the burning that many farmers make of these vegetal waste, avoiding the reuse of these wastes, both atmospheric contamination by smoke, and the damage of the soil by burn or slash of these.

In this way, the process of the invention allows all agricultural waste to be used, on the one hand, organic sludge coming from cattle liquid industrial wastes (LIW) and faeces, which also include sludge from livestock sewage, product of the washing of pens with cattle teak, as well as sludge containing parts of dead or composted animals, and on the other hand, agricultural waste such as straw or other dried vegetals, such as corms and corn plants, rice shells, etc. Surprisingly, with the process of the invention, these agricultural and livestock wastes, mixed with clays or SIALO flour, form a builder, conditioner and/or organic soil biofertilizer that allows the reconstitution of the soil at a much greater speed than autonomously or natural.

### PREVIOUS ART

In the state of the art, different fertilizer products from organic matter and volcanic rocks are described, but no document anticipates either the process or the product of the invention.

For example, the document WO2001019940A1 describes a composition comprising mixing vegetal material, igneous rock powder, surfactant and water, and then treating this compost with an acidifying agent, where said process does not comprise employing animal waste sludge, as the process of the present invention.

The application of the University of Concepción and the University of Talca, CL 3780-2013, refers to biofertilizers, where agricultural wastes are fermented in solid state, then nanoparticles of allophane are added, with the aim of immobilizing enzymes and substrates produced in the fermentation, followed by a new fermentation to favor the development of microorganisms. The invention has the advantage that it does not work with nanoparticles. and that the mineral used can be simply clay, so it is a much cheaper technology than that described in the document, additionally the invention contemplates the use of dry vegetal material, material that is not used in CL 3780-2013.

The document EP3037397A1 points to a method for the production of compost, or special soils, and the culture medium for planting seeds or flowers. The method consists of mixing raw materials, digested manure and tertiary soils, until the pH reaches 5.5-7 or 3.5-5.5. The method involves adding 0.5-0.8% by weight of an aggregate to the mixture, where the aggregate is crushed rock such as clay, or mineral or volcanic rock. The method additionally involves the addition of an adequate amount of trace elements. The method consists in preparing the soil mixture using horn splinters, horn meal, blood meal, soft wood chips, cotton waste, textile waste, coconut fibers, bark manure, wood fibers and rice husks or grain. The invention differs from this document in that it does not use soil as a component and that it includes a fermentation of the raw materials.

As can be seen, the art state does not anticipate the method of the present invention.

### DETAILED DESCRIPTION OF THE INVENTION

As already indicated above, the present invention consists of a reconstituyente, conditioner and/or organic biofertiiízante of soils, and its process of elaboration, having an organic base that will allow to increase the availability of nutrients in the soil to be used when the plant require, or the recovery of degraded soils. The process of the invention uses any type of animal waste sludge in conjunction with dry vegetal material and granulated minerals, this mixture is subjected to a fermentation for a period of time of between 40 to 210 days, where the builder, conditioner and/or organic soil biofertilizer of the invention is obtained.

The process for obtaining a reconstitutant, conditioner and/or organic soil biofertilizer of the invention comprises the following steps:
a. mixing animal waste sludge with vegetal waste in a biodigester, composting field or mixing piles, where the final mix has between 35 to 45% humidity;
b. fermenting this mixture for between 40 and 210 days;
c. incorporating granulated mineral into the mixture;
d. obtaining the builder, conditioner and/or organic soil biofertilizer.

Wherein the sludge of animal waste corresponds to primary or secondary sludge of the livestock industry, of LIW and animals faeces. And the vegetal waste comprises 20 to 100% of dry vegetal material. Wherein the vegetal waste are chosen from straw, plantation debris, com waste including corms, rice shells, dry leaves, pine needles, cues, shells and/or sawmill waste. And the vegetal material is incorporated in a proportion of between 30 to 60% w/v with respect to the sludge used.

Wherein the granulated mineral is chosen between clay, SIALO flour, slag or ash. The granulated mineral is incorporated in a proportion of between 10 to 30% w/w with respect to the mixture of animal waste sludge with vegetal waste. The granulated mineral is incorporated after the fermentation of the animal waste sludge and vegetal waste, and the fermentation is maintained for 6 additional weeks.

The fermentation is anaerobic and is carried out in a closed biodigester or in a hot bed; at a temperature between 60 to 70 °C and at a pH between 7 to 8.

The fermentation stage optionally comprises to dispose the product in drying piles the last 2 weeks of the process, in order to allow the cooling of the builder, conditioner and/or organic soil biofertilizer product.

The invention also aims at the builder, conditioner and organic soil biofertilizer product obtained by the described process.

The process of the invention consists of a fermentation of animal waste sludge and vegetal material, which varies according to the composition of the sludge, and a second stage of fermentation that includes adding granulated ore. The process of the invention can be carried out in any known anaerobic fermentation medium, including piles, biodigesters, "hot bed", etc.

The animal waste sludges may correspond to primary or secondary sludge from animal feaces and/or waste sludge from animal parts, that is to say LIW from livestock, fishing, poultry, aquaculture or other industries. It will be evident to the person skilled in the art that the method of the invention can also employ domestic sewage sludge, composition of which is similar to animal waste sludge. If these sludges have been subjected to a previous fermentation by using a biodigester, they are known as secondary sludge or digestates, and any of them can be used in the method of the present invention.

For the process of the invention it is required that the mixture of animal waste and vegetal material have a final humidity of 15-50% weight/weight, many times the final sludges does not have this percentage of humidity. In case the sludges are dry, water can be added to the mixture until reaching the desired percentage. In case the sludge is too wet, drier vegetal material is used, or completely dry, to obtain the proper humidity in the final mixture.

Therefore, the animal waste sludges are mixed with vegetal material, it is special, with waste material from the agricultural industry, in order to solve problems of disposal of these materials that often are even burned by farmers. As vegetal material can be used straw, residues of corn plantations, including corms, rice shells, dry leaves, pine needles, cues, shells, sawmill waste, and ultimately any residues from plantations. Conveniently, at least 20% of the vegetal material must be dry.

The vegetal material is incorporated in a proportion of between 30 to 60% w/v with respect to the sludge used.

If the sludges is raw or primary, it will be applied between 35 - 50% w/v of vegetal material. Of which at least 20% must be dry, wherein the dry matter is essential to accelerate the decomposition and fermentation, facilitating the way to the product of the invention.

In a preferred embodiment, between 25-40% w/v of vegetal material is applied, maintaining on the mixture a layer of between 30 to 60 cm thick of dry vegetal material on the surface, for example straw. This allows to maintain the mixture at an ideal temperature for the process, of 25-65°C average.

In the case of a hot bed (fermentation *in situ,* in the pen), 50 cm of bed of initial dry vegetal material will be applied on the floor of the livestock production. This hot bed should be maintained with a dry surface between 30 to 60 cm thick.

The hot bed is a production process, wherein the animals are, in all their stages maintained in pens without slab, with a initial layer of dry matter (straw) preferably of 50 cm. After placing this layer, the animals are entered, which perform all their organic functions on it. Once the *in situ* fermentation process is initiated by the decomposition of the organic matter and the faeces of the animals, a layer of between 30-50 cm of dry matter is permanently applied to keep them dry and protected from the humidity generated in the fermentation process. This layer is usually applied every 48-76 hours.

If the sludge is secondary or digestates, it will be applied between 45 to 60% w/v of vegetal material, with at least 20% of dry vegetal material. The additional vegetal material allows to recover the carbon, fiber and other components lost in the generation of methane, and obtain an appropriate product for the reconstitution of soils, the ideal temperature for the process is between 55-65 °C average.

Finally, granulated mineral is added to these mixtures, the mineral can be clay, SIALO flour, which is obtained by crushing igneous rock, slag or even ashes. The maximum granulation of the mineral to be used is 200 nm, and the mineral is added in a proportion of 10 to 30% weight/weight to the previous mixture.

The inventors have found that the granulated mineral can be added after the beginning of the fermentation of sludge and vegetal material, however, the preferred embodiment comprises incorporating it in the final stage of the process, which determines the last 8 final weeks thereof.

Once the mixture of the invention is obtained it is subjected to anaerobic fermentation, for example, in "Hot bed", or in fermentation reactors. (Biodigesters)

It is important that the processes are protected from rain, either indoors or covered with impermeable material, such as plastic.

Digestion in biodigesters produces methane gas, so the digesters or reactors must be closed and have a system for capturing the gas produced. Additionally, the fermentation is carried out at a temperature of between 60 to 70 °C and a pH between 6.5 to 8.5, especially between 7 and 8.

During fermentation the pathogen microorganisms die due to anaerobic conditions and high temperatures reached, up to 70 °C, while the organic matter is degraded to appropriate nutrients for crops. The increase in temperature occurs naturally by fermentation.

In the second stage the granulated material is added to the fermented mixture in a proportion of 10 to 30% weight/weight, initiating the second stage of the process. This second stage of maturation lasts 6 weeks, at a pH between 6 and 7.5, wherein if the pH decreases it is increased by adding lime to the fermented material. Finally, the stabilized mixture is allowed to cool for 2 weeks, thus ending the process.

Surprisingly, after a very short period of time, between 80 and 210 days, the process has already been completed and the organic soil reconstitutant, conditioner and/or biofertilizer has been formed.

If the final product has between 35 and 48% humidity, it is used as a builder substrate and or organic soil conditioner. If in default, its humidity is between 10 and 20% it is used as an organic biofertitizer. This product can be used directly on agricultural soil at the end of the process.

Once the process of the invention is finished, the soil builder substrate and/or biofertilizer of the invention having the nutritional characteristics described in Table 1 is obtained; and chemical composition, % compound in mass and % element in mass indicated in Table 2, included below.

| **Table N°1.- Nutrit ional composition for soil reconstitution** | |
|---|---|
| **Compound** | **Mass percentage** |
| Dry mat er | 55-54% |
| Nitrogen (N) | 1.56-4.60% |
| Phosphorous (P) | 0.78-10.0% |
| Potassium (k) | 0.38-2.5% |
| Calcium (Ca) | <3.08% |
| Magnesium (Mg) | <4.0% |
| Organic matter | 80-85% |
| Sodium | 10-3.48% |
| Manganese | <580 ppm mg/kg <1000 |
| Sulfur | <322% mg/kg-1 < 0.32% (SO4) |
| Iron | <5600 ppm mg/kg <7000 |
| Boron | <17 ppm mg/kg <7000 |
| Zinc (Zn) | <17 ppm mg/kg <120 |
| Organic carbon | 5-19.25% |
| Moisture | 36-45% |
| Total humic extract | <5.39 |
| Humic acids | <4.46 |
| Fulvic acids | <0.93 |
| C/N rat b | <17.08 |
| pH | 5.5-3.6 |
| Electric Conductivity | dS/m2-10 |
| Copper | mg/kg<2.500 ppm 80 |
| Lead | mg/kg 4-8 |
| Cadmium | mg/kg <0.01 |
| Arsenic | mg/kg <0.05 |
| Mercury | mg/kg <0.005 |
| Density | kg/m3 520-750 g/cm3 0.52-0.80 |
| Carbon | 1-160 parts of C/1 part of N |
| Organic carbon % average | Organic carbon (g/kg) |
| Ct 10.81% | 108.0 |
| Cext 4.06% | 4.3 |
| Cha 48.91% | 2 |
| Cfa 51.09% | 2.3 |
| CaO | 12.50-13.31% |
| SiO2 | 38.060-43.04% |
| Al2O3 | 12.60-14.630% |
| Fe2O3 | 10.480-13.380% |
| MgO | 10.380-10.740% |
| SO3 | 0.101-0.330% |
| K2O | 1.670-1.940% |
| Na2O | 2.65-4.690% |
| Cr2O3 | 0.070-0.072% |
| NiO | 0.090-0.095% |
| SrO | 0.100-0.107% |
| MnO | 0.170-0.176% |
| P2O5 | 1.500-1.630% |
| TiO2 | 2.750-2.765% |
| P.F. | 2.800-2.870% |
| SiO2R | 27.680-27.690% |

**Table 2**

| **Compound** | **Mass percentage** | | **Element** | **Mass percentage** |
|---|---|---|---|---|
| SiO₂ | 49.50% | 38.06 | Si | 25.40-17.49 |
| TiO₂ | 2.10% | 2.76 | Ti | 1.650-2.760 |
| Al₂O₃ | 14.95% | 12.6 | Al | 8.00-7.40 |
| Fe₂O₃ | 3.70% | 14.8 | Fe | 3.70-7.33 |
| FeO | 8.70% | | | |
| MnO | 0.19% | 0.176 | Mn | 0.136-0.176 |
| MgO | 6.80% | 10.38 | Mg | 6.26-6.80 |
| CaO | 9.60% | 13.1 | Ca | 5.60-9.51 |
| Na₂O | 0.35% | 4.69 | Na | 3.48 |
| K₂O | 1.15% | 1.94 | K | 1.150-1.610 |
| P₂O₅ | 0.38% | 1.53 | Px | 0.350-0.666 |
| SO₃ | 0.33% | 0.101 | Sx | 0.04 |
| PF | 2.870% | 2.800 | | |
| SiO₂R | 27.690% | 27.680 | | |
| MnO | 1500 ppm | | Mn | 0.136-0.176 |
| Cu | 87 ppm | | | |
| Zn | 105 ppm | | | |
| B | 5 ppm | | | |
| Mo | 1.5 ppm | | | |
| Cr | 220 ppm | 0.072 | Cr | 0.049 |
| Co | 48 ppm | | | |
| Ni | 200 ppm | 0.095 | Ni | 0.075 |
| Sr | 465 ppm | 0.107 | Sr | 0.091 |
| Ba | 330 ppm | | | |

The stabilization of secondary sludge in normal composting, currently carried out in composting fields, takes between 210 and 360 days. This will depend on the climate and environmental humidity where this process is carried out, so that the method of the invention allows a very significant acceleration of the stabilization of the sludge.

The scope of the invention can be better understood in the examples included below.

### EMBODIMENTS EXAMPLES

Different embodiments of the process of the invention are described below.

### a) Process in biodigester.

Primary waste sludges from the livestock industry (LIW, faeces and wastewater) were placed in a biodigester (10 m³) 10000 L of sludge, with approximately 70% humidity (in this example an approximate humidity is indicated because the mixture does not have a homogeneous humidity, however, the measurement registered 71%). The result of this is the generation of methane gas, generator of caloric and electric energy. The methane gas produced in the process was collected and recovered.

The product obtained has a pH of 7.80, slightly alkaline; an electrical conductivity (EC) in microohms of 20.91. A sample of 100 grams was analyzed and the following values were found:
- MO (organic matter) 34%;
- CO (organic carbon) 19.72%;
- N 1.70%;
- The Carbon/Nitrogen C/N ratio is 11.60;
- P 0.13%;
- Na 0.015%;
- K 0.135%;
- Ca 0.19%;
- Mg 0.18%;
- Fe 839 ppm;
- Mn 56.3 ppm;
- Zn 51.5 ppm and
- Cu 5.5 ppm

These residual sludge or biodigestates were mixed in closed containers, with straw, from dry bales in proportions of 50% dry matter and 50% biodigestates, which is equivalent to a 50% w/v mixture. Both components were mixed, where the final mixture had 40% humidity. This mixture was coated with dry straw in order to preserve the heat. The fermentation was allowed for 12 weeks, controlling that the pH were maintained over 8, if the pH was lowered, lime was added in order to increase it. The temperature was controlled, which naturally, by the fermentation process, was around 65 °C. On the third month, 20% of SIALO flour was added, which was mixed with the fermentation already obtained and the mixture was continued in stabilization for 6 more weeks. Finally, the compost obtained was placed in drying piles for an 2 additional weeks, in order to allow the cooling of the Builder, conditioner and organic soil biofertilizer product, thus completing the 8 additional weeks of the process.

### b) Process in pile

Primary waste sludges from the intensive livestock industry, (LIWs, faeces, guanos, slurries and sewage), coming from a decanter pool or directly from a pen, were disposed in a drying pile (50 m³) 50000 L of sludge, with a 70% initial humidity.

It was added 35% of vegetal material with 75% dry matter, producing a compost in fermentation, stirring and mixing for 120 days. As result of this mixture in fermentation process, a temperature between 55 °C and 65 °C is reached naturally (specifically in the example was 60 °C), pathogens are removed, leached and percolated. It was possible to lower the humidity to 37%, producing a compost of nutritious characteristics similar to an organic bio-stabilized. To this mixture, 20% SIALO flour was added, which was mixed with the fermentation already obtained and was coated with dry straw in order to preserve the heat. The maturation was allowed for 6 weeks, controlling that the pH was maintained over 8, if the pH dropped, lime was added in order to increase it to the desired value. Finally, the fermentation product was allowed to cool for 2 weeks, totaling 8 weeks, with a total process time of 180 days.

### c) Hot bed process.

Organic composts from hot beds were placed in mixing piles (50 m³) 32.5 MT (metric ton) of stabilized, with 40% initial humidity. The indicated product is a stabilization of pre-dry organic matter, producing a compost in fermentation *in situ,* which is achieved in livestock production pens, stirring and mixing with the bustle of the animals for 200 days (it can be a range of 150 to 210 days) the organic sludge generated by these with dry matter. The result of this mixture in controlled process with average temperatures of approximately 55 °C during the fermentation, was lowered to 40 °C inside the bed. With an initial process humidity of between 25 - 85% (in the example was 40%) in the lower layer of the pen and permanently maintaining a layer of not less than 30 cm of superior dry matter, it was obtained in the indicated time, a final mix of organic compost with a humidity of about 40% and a surface temperature of about 31 °C. The composition of the hot bed is in Table 3.

**Table 3. Nutritional composition of the hot bed during fermentation**

| | |
|---|---|
| Moisture | 72,1-80.73% |
| Raw protein | 14.69-26.92% |
| Ether extract | 3.85-10.9% |
| Ashes | 9.25-20.34% |
| FND | 28.42-68.65% |
| FAD | 7.95-29.93% |
| CNE | 4.86-23.26% |
| Ca | 2.51-5.01% |
| P | 0.19-0.29% |
| Cu | 427.64-1160.5 mg/kg |

Manure contribution, calculation corresponds to 400 animals at 180 days average.

360,000 kg - 3,600,000 kg. The post-fermentation nutritional composition, hot bed compost is described in Table 4.

| **Table 4** | |
|---|---|
| O.M | 40-60% |
| pH | 7-8.6% |
| E.C. | 3-10.0 dS/m |
| N | 3-4.5% |
| P2O5 | 6-10.0% |
| K2O | 1.5-2.5% |
| CaO | 5-6.5% |
| MgO | 2-4.0% |
| Cu | 1000-2000 mg/kg |
| Zn | 2000-3500 mg/kg |
| Mn | 800-1000 mg/kg |
| Fe | 4000-7000 mg/kg |
| B | 80-120 mg/kg |
| Lead | 4-8 mg/kg |
| Cadmium | <0.01 mg/kg |
| Arsenic | <0.05 mg/kg |
| Mercury | <0.005 mg/kg |
| Density | 600-750 kg/m3 |

To this mixture, 20% SIALO flour was added, which was mixed with the fermentation already obtained and was coated with dry straw in order to preserve the heat. Maturation was allowed for 6 weeks, controlling that the pH was maintained over 8, if the pH drop, lime is added in order to increase it. Finally, the product of the fermentation was allowed to cool for 2 weeks, for a total of 8 weeks.

The final product of any of the processes described has the appearance of earth, and its constitution is included in what is described in Tables 1 and 2 of the description.

## Claims

1. Process of obtaining a builder, conditioner and or organic soil biofertilizers, wherein it comprises the following stages:
a. mixing animal waste sludge with vegetal waste in a biodigester, composting field or mixing piles, where the final mix has between 35 to 45% humidity;
b. fermenting this mixture for between 40 and 210 days;
c. incorporating granulated mineral into the mixture;
d. obtaining the builder, conditioner and/or organic soil biofertilizer.

2. Process according to claim 1, wherein the animal waste sludges correspond to primary or secondary sludges of the livestock industry, animal LIWs and faeces.

3. Process according to claim 1, wherein the vegetal waste comprises from 20 to 100% of dry vegetal material.

4. Process according to claim 3, wherein the vegetal wastes are chosen among straw, plantation remains, com waste including corms, rice shells, dry leaves, pine needles, cues, shells and/or sawmill waste.

5. Process according to claim 1, wherein the vegetal material is incorporated in a proportion of between 30 to 60% with respect to the sludge used.

6. Process according to claim 1, wherein the granulated mineral is chosen from clay, SIALO flour, slag or ash.

7. Process according to claim 6, wherein the granulated mineral is incorporated in a proportion of between 15 to 25% with respect to the mixture of animal waste sludges with vegetal waste.

8. Process according to claim 7, wherein the granulated mineral is incorporated after the fermentation of the animal waste sludge and vegetal waste, and the fermentation is maintained for 6 additional weeks.

9. Process according to claim 1, wherein the fermentation is anaerobic and is carried out in a closed biodigester or in a hot bed.

10. Process according to claim 9, wherein the fermentation is carried out at a temperature of between 60 to 70 °C and a pH between 7 to 8.

11. Process according to claim 1, wherein the fermentation step optionally comprises disposing the product in drying piles the last 2 weeks of the process, in order to allow the cooling of the builder, conditioner and organic soil biofertilizer product.

12. Builder, conditioner and organic soil biofertilizer product, wherein it is obtained by the process described in any of the preceding claims.
